# EUROPEAN PATENT APPLICATION

(11) **EP 4 187 975 A1**
(43) Date of publication of application: **31.05.2023**
(21) Application number: 23165920.2
(22) Date of filing: 31.03.2023
(51) Int. Cl.: H04W 36/00, H04W 36/24, H04W 36/30

(54) **METHOD AND DEVICE FOR DETERMINING HANDOVER TARGET**

(30) Priority: 20.10.2022 CN 202211286694
(71) Applicant: Lite-On Technology Corporation, Taipei City 11492 (TW)
(72) Inventor: FAN CHIANG, Tsung-Yi, Taipei City (TW)
(74) Representative: Patentship Patentanwaltsgesellschaft mbH

(57) **Abstract**

A method for determining a handover target is provided. The method includes receiving a measurement report transmitted by a user equipment (LTE). The method includes obtaining a handover priority list according to the measurement report. The method includes instructing the UE to execute a handover procedure according to the handover priority list and obtaining a handover result. The method includes obtaining handover parameters according to the handover result. The method includes training a handover model according to the measurement report, the handover parameters and neighborhood information to update the handover priority list.

## Description

### BACKGROUND OF THE APPLICATION

### Field of the Application

The present disclosure generally relates to a method and device for determining a handover target. More specifically, aspects of the present disclosure relate to a method and device for determining a handover target using machine learning and artificial intelligence (AI).

### Description of the Related Art

Network densification via base stations (BSs) deployment has been a viable solution for cellular operators to cope with increasing demands for higher capacity. It is also expected that cellular operators will rely on network densification to fulfill a big chunk of the ambitious fifth generation (5G) requirements. Network densification can be achieved by deploying different types of BSs (e.g., macro, micro, pico, and femto) according to the performance, time, and cost tradeoffs. Deploying more BSs decreases the service area (also referred to as the footprint) of each BS, which improves the spatial spectral utilization and network capacity.

Handover refers to a process in which a mobile device moves from one base station coverage area to another base station coverage area during a call, or it hands over to another transmission channel due to external interference. The handover process has been discussed in detail in Chapter 9.2.3.2 "Handover" of 3GPP TS 38.300 (Version 17.0.0).

However, network densification and the integration of various wireless communication products and frequency bands will greatly increase the complexity of handovers. In highly dense 5G cellular networks, handover delays may neutralize or even negate the gains offered by network densification. Therefore, there is a need for a method and device for determining a handover target to improve the above disadvantages and improve performance.

### SUMMARY

The following summary is illustrative only and is not intended to be limiting in any way. That is, the following summary is provided to introduce concepts, highlights, benefits and advantages of the novel and non-obvious techniques described herein. Select, not all, implementations are described further in the detailed description below. Thus, the following summary is not intended to identify essential features of the claimed subject matter, nor is it intended for use in determining the scope of the claimed subject matter.

A first aspect of the invention provides a method for determining a handover target, comprising: receiving a measurement report transmitted by a user equipment (UE); obtaining a handover priority list according to the measurement report; instructing the LTE to execute a handover procedure according to the handover priority list and obtaining a handover result; obtaining handover parameters according to the handover result; and training a handover model according to the measurement report, the handover parameters and neighborhood information to update the handover priority list.

In a first embodiment of the first aspect, the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In a second embodiment of the first aspect, the handover parameters at least comprise handover attempts, handover success, handover cancellations, and network reasons.

In a third embodiment of the first aspect, the neighborhood information is transmitted by a base station or a core network, and at least comprises: General Packet Radio Service (GPRS), a cell type, time and a cell capacity.

In a fourth embodiment of the first aspect, the handover model is based on a Recursive Neural Network (RNN) model or a Deep Recursive Neural Network (DRNN) model.

A second aspect of the invention provides a method for determining a handover target, comprising: training a handover model according to handover data; generating a handover priority list using the handover model according to a measurement report and neighborhood information when receiving the measurement report transmitted by a user equipment (UE); instructing the UE to execute a handover procedure according to the handover priority list and obtaining a handover result; obtaining handover parameters according to the handover result; and updating the handover priority list using the handover model according to the measurement report, the neighborhood information and the handover parameters.

In a first embodiment of the second aspect, the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In a second embodiment of the second aspect, the handover parameters at least comprise handover attempts, handover success, handover cancellations, and network reasons.

In a third embodiment of the second aspect, the neighborhood information is transmitted by a base station or a core network, and at least comprises: General Packet Radio Service (GPRS), a cell type, time and a cell capacity.

In a fourth embodiment of the second aspect, the handover model is based on a Recursive Neural Network (RNN) model or a Deep Recursive Neural Network (DRNN) model.

A third aspect of the invention provides a device for determining a handover target, comprising: one or more processors; and one or more computer storage media for storing one or more computer-readable instructions, wherein the processor is configured to drive the computer storage media to execute the following tasks: receiving a measurement report transmitted by a user equipment (LTE); obtaining a handover priority list according to the measurement report; instructing the UE to execute a handover procedure according to the handover priority list and obtaining a handover result; obtaining handover parameters according to the handover result; and training a handover model according to the measurement report, the handover parameters and neighborhood information to update the handover priority list.

In a first embodiment of the third aspect, the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In a second embodiment of the third aspect, the handover parameters at least comprise handover attempts, handover success, handover cancellations, and network reasons.

In a third embodiment of the third aspect, the neighborhood information is transmitted by a base station or a core network, and at least comprises: General Packet Radio Service (GPRS), a cell type, time and a cell capacity.

In a fourth embodiment of the third aspect, the handover model is based on a Recursive Neural Network (RNN) model or a Deep Recursive Neural Network (DRNN) model.

A fourth aspect of the invention provides a device for determining a handover target, comprising: one or more processors; and one or more computer storage media for storing one or more computer-readable instructions, wherein the processor is configured to drive the computer storage media to execute the following tasks: training a handover model according to handover data; generating a handover priority list using the handover model according to a measurement report and neighborhood information when receiving the measurement report transmitted by a user equipment (UE); instructing the UE to execute a handover procedure according to the handover priority list and obtaining a handover result; obtaining handover parameters according to the handover result; and updating the handover priority list using the handover model according to the measurement report, the neighborhood information and the handover parameters.

In a first embodiment of the fourth aspect, the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In a second embodiment of the fourth aspect, the handover parameters at least comprise handover attempts, handover success, handover cancellations, and network reasons.

In a third embodiment of the fourth aspect, the neighborhood information is transmitted by a base station or a core network, and at least comprises: General Packet Radio Service (GPRS), a cell type, time and a cell capacity.

In a fourth embodiment of the fourth aspect, the handover model is based on a Recursive Neural Network (RNN) model or a Deep Recursive Neural Network (DRNN) model.

Therefore, the main purpose of the present disclosure is to provide a method and device for determining a handover target to improve the above disadvantages and improve performance.

In an exemplary embodiment, a method for determining a handover target is provided. The method comprises receiving a measurement report transmitted by a user equipment (UE). The method comprises obtaining a handover priority list according to the measurement report. The method comprises instructing the UE to execute a handover procedure according to the handover priority list and obtaining a handover result. The method comprises obtaining handover parameters according to the handover result. The method comprises training a handover model according to the measurement report, the handover parameters and neighborhood information to update the handover priority list.

In some embodiments, the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In some embodiments, the handover parameters at least comprise handover attempts, handover success, handover cancellations, and network reasons.

In some embodiments, the neighborhood information is transmitted by a base station or a core network, and at least comprises: General Packet Radio Service (GPRS), a cell type, time and a cell capacity.

In some embodiments, the handover model is based on a Recursive Neural Network (RNN) model or a Deep Recursive Neural Network (DRNN) model.

In an exemplary embodiment, a method for determining a handover target is provided. The method comprises training a handover model according to handover data. The method comprises generating a handover priority list using the handover model according to a measurement report and neighborhood information when receiving the measurement report transmitted by a user equipment (UE). The method comprises instructing the UE to execute a handover procedure according to the handover priority list and obtaining a handover result. The method comprises obtaining handover parameters according to the handover result. The method comprises updating the handover priority list using the handover model according to the measurement report, the neighborhood information and the handover parameters.

In an exemplary embodiment, a device for determining a handover target is provided. The device comprises one or more processors; and one or more computer storage media for storing one or more computer-readable instructions. The processor is configured to drive the computer storage media to execute the following tasks: receiving a measurement report transmitted by a user equipment (LTE); obtaining a handover priority list according to the measurement report; instructing the UE to execute a handover procedure according to the handover priority list and obtaining a handover result; obtaining handover parameters according to the handover result; and training a handover model according to the measurement report, the handover parameters and neighborhood information to update the handover priority list.

In an exemplary embodiment, a device for determining a handover target is provided. The device comprises one or more processors; and one or more computer storage media for storing one or more computer-readable instructions. The processor is configured to drive the computer storage media to execute the following tasks: training a handover model according to handover data; generating a handover priority list using the handover model according to a measurement report and neighborhood information when receiving the measurement report transmitted by a user equipment (UE); instructing the UE to execute a handover procedure according to the handover priority list and obtaining a handover result; obtaining handover parameters according to the handover result; and updating the handover priority list using the handover model according to the measurement report, the neighborhood information and the handover parameters.

### BRIEF DESCRIPTION OF DRAWINGS

The accompanying drawings are included to provide a further understanding of the present disclosure, and are incorporated in and constitute a part of the present disclosure. The drawings illustrate implementations of the disclosure and, together with the description, serve to explain the principles of the disclosure. It should be appreciated that the drawings are not necessarily to scale as some components may be shown out of proportion to their size in actual implementation in order to clearly illustrate the concept of the present disclosure.
FIG. 1 is a schematic diagram illustrating a wireless network according to an embodiment of the present disclosure.
FIG. 2 is a schematic diagram illustrating a process for training a handover model according to the first embodiment of the present disclosure.
FIGS. 3A~3B are schematic diagrams illustrating a process for training a handover model according to the second embodiment of the present disclosure.
FIG. 4 is a flowchart illustrating the method for determining a handover target according to an embodiment of the present disclosure.
FIG. 5 is a flowchart illustrating the method for determining a handover target according to an embodiment of the present disclosure.
FIG. 6 illustrates an exemplary operating environment for implementing embodiments of the present disclosure.

### DETAILED DESCRIPTION

The embodiments of the present disclosure provide a method and a device for determining a handover target. The method and device for determining a handover target introduce artificial intelligence (AI) and machine learning, which can achieve the purpose of quickly processing handover calculations.

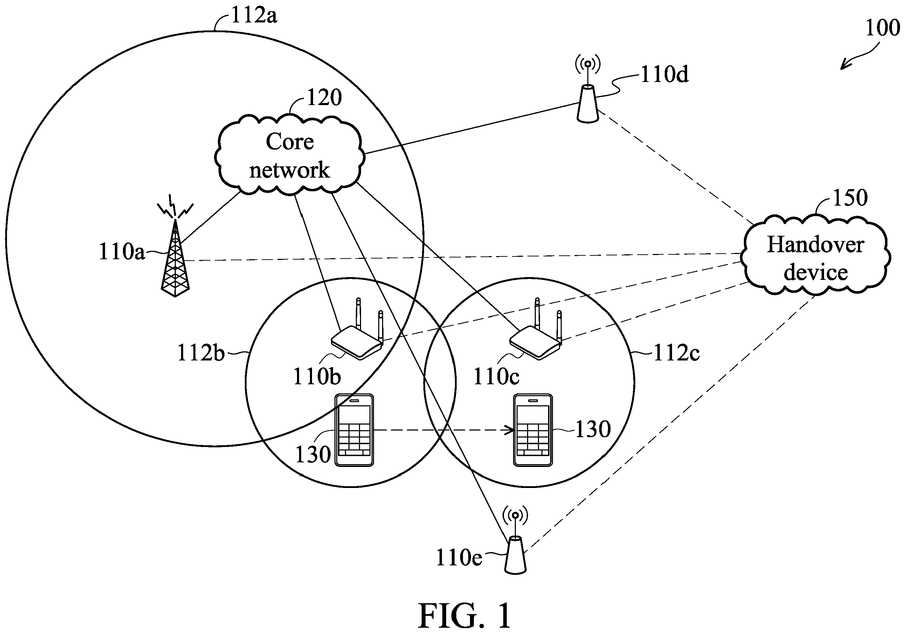

FIG. 1 is a schematic diagram illustrating a wireless network 100 (e.g., new radio (NR) or 5G network) according to an embodiment of the present disclosure.

As illustrated in FIG. 1, the wireless network 100 may comprise a number of base stations 110a~110e and a core network 120. The base stations 110a~110e may be a station that communicates with LTEs. Each base station 110a~110e may provide communication coverage for a particular geographic area. In 3GPP, the term "cell" can refer to a coverage area of a Node B and/or a Node B subsystem serving this coverage area, depending on the context in which the term is used. In NR systems, the term "cell" and eNB, Node B, 5G NB, AP, NR BS, NR BS, gNB, RAN, or TRP may be interchangeable. In some examples, a cell may not necessarily be stationary, and the geographic area of the cell may move according to the location of a mobile base station. In some examples, the base stations may be interconnected to one another and/or to one or more other base stations or network nodes (not shown) in the wireless network 100 through various types of backhaul interfaces such as a direct physical connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a frequency channel, etc. Each frequency may support a single RAT in a given geographic area in order to avoid interference between wireless networks of different RATs. In some cases, NR or 5G RAT networks may be deployed, employing a multi-slice network architecture.

The base stations 110a~110e may provide communication coverage for a macro cell, a pico cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by LTEs with service subscription. In the example shown in FIG. 1, the base station 110a may be a macro base station for the macro cells 112a. The base stations 110b and 110c may be pico base station for pico cells 112b and 112c, respectively. In addition, the base station 110d may be an access point (AP) using the Wi-Fi protocol and the BS 110e may be a device that supports the unlicensed band defined in 3GPP TR 38.889.

The core network 120 is a public data network, such as the Internet, a private data network or a combination thereof.

The UE 130 may be dispersed throughout the wireless network 100, and the UE 130 may be stationary or mobile. The UE 130 may also be referred to as a feature phone, a smart phone, a tablet personal computer (PC), a notebook computer, a machine-type communication (MTC) device or any wireless communication device supporting the radio access technology used by the core network 120 and the wireless network 100.

The handover device 150 is used to determine a handover target of the UE 130, which can be implemented as a network element on dedicated hardware, or as a software instance running on dedicated hardware, or as a virtualized function instantiated on an appropriate platform, e.g., a base station, a RAN device, or a cloud infrastructure.

It should be understood that when the handover device 150 is used as dedicated hardware, the handover device 150 can be implemented via any type of computing device, such as the electronic device 700 described with reference to FIG. 7, as shown in FIG. 7.

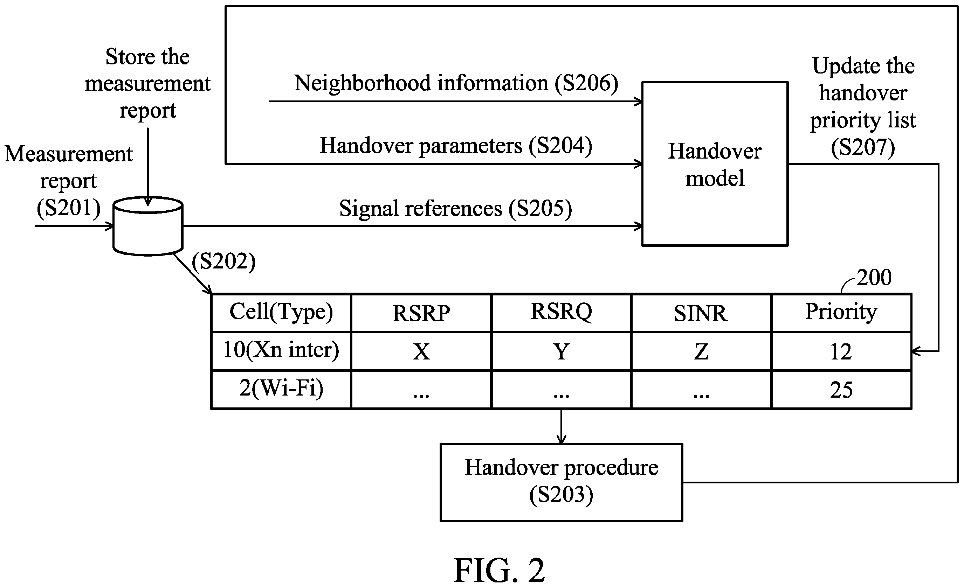

FIG. 2 is a schematic diagram illustrating a process for training a handover model according to the first embodiment of the present disclosure, wherein the handover model may be realized by a processor of the handover device.

It should be noted that the measurement report, the measurement report implementation content, and the message parameters sorted out from the measurement results used in the following examples are defined in 3GPP TS 38.331, wherein the message parameters can include SINK, RSRP, RSRQ, RSSI, averageDelay and other parameters.

When the handover device receives the measurement report transmitted by the UE (S201), the handover device may store the measurement report, and generate a handover priority list 200 according to the measurement report (S202). As shown in the FIG. 2, the handover priority list 200 at least comprises a cell identifier (ID) and a cell type, a reference signal receiving power (RSRP), a reference signal receiving quality (RSRQ), a signal to interference-plus-noise ratio (SINR) and a priority.

Next, the handover device may determine a handover target according to the handover priority list 200, and instruct the UE to execute a handover procedure (S203). As shown in FIG. 2, the first priority handover target in the handover priority list 200 is Cell 10. The UE may execute the handover procedure to handover to Cell 10.

When the handover procedure ends, the handover device may obtain a handover result, obtain handover parameters according to the handover result, and input the handover parameters into a handover model (S204), wherein the handover parameters at least comprise parameters such as handover attempts, handover success, handover cancellations, and network reasons. In one embodiment, the handover model is based on a Recursive Neural Network (RNN) model or a Deep Recursive Neural Network (DRNN) model.

The handover device may obtain the signal references according to the measurement report (S205), wherein the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In this schematic diagram, the handover device may continuously receive the neighborhood information transmitted by the base station or the core network (S206), wherein the neighborhood information at least comprises: General Packet Radio Service (GPRS), a cell type, time and a cell capacity.

The handover device trains a handover model according to the signal references in the measurement report, the handover parameters and the neighborhood information, so as to update the handover priority list 200 (S207). The handover device determines whether the LTE needs to execute the handover procedure according to the updated handover priority list 200.

Specifically, before the handover model is updated and the handover priority list 200 is output, the handover device first generates a handover priority list 200 according to the measurement report in S202. After the handover model has been updated and the handover priority list 200 is output, the handover device may repeatedly execute steps S203-S207. In other words, the handover device may train and correct the handover model in real time to achieve the purpose of updating the handover priority list 200 in real time.

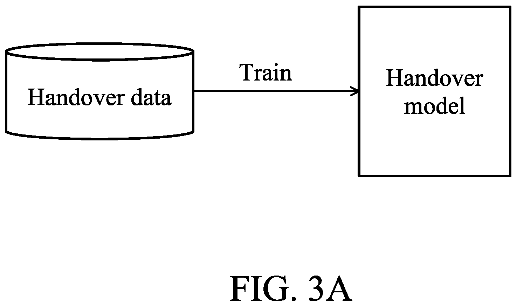

FIGS. 3A~3B are schematic diagrams illustrating a process for training a handover model according to the second embodiment of the present disclosure, wherein the handover model can be implemented by a processor of the handover device.

In FIG. 3A, the handover device first trains a handover model according to a handover data, wherein the handover data is relevant historical data after the UE executes the handover procedure. In one embodiment, the handover model is based on a Recursive Neural Network (RNN) model or a Deep Recursive Neural Network (DRNN) model.

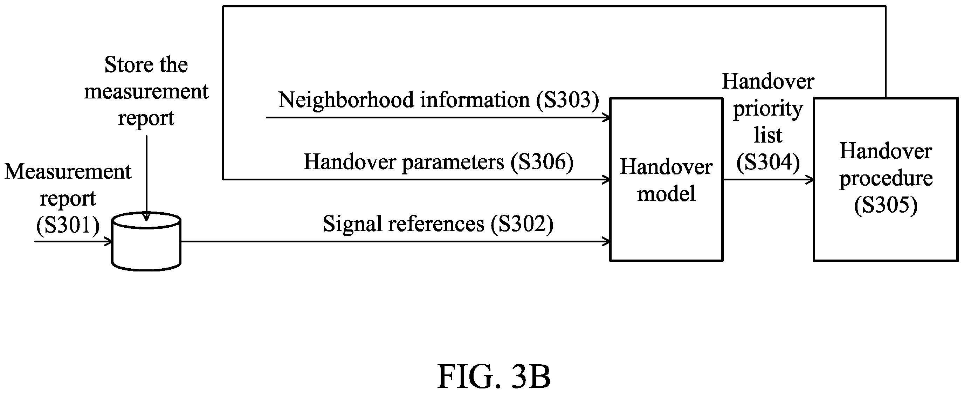

In FIG. 3B, when the handover device receives the measurement report transmitted by the LTE (S301), the handover device may store the measurement report, and obtain signal references according to the measurement report (S302), wherein the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In this schematic diagram, the handover device may continuously receive the neighborhood information transmitted by the base station or the core network (S303), wherein the neighborhood information at least comprises: General Packet Radio Service (GPRS), a cell type, time and a cell capacity.

Next, the handover device inputs the signal references in the measurement report and the neighborhood information into the handover model. The handover model may generate a handover priority list according to the signal references and the neighborhood information (S304). In one embodiment, the handover priority list at least comprises a cell identifier (ID) and a cell type, a Reference Signal Receiving Power (RSRP), a Reference Signal Receiving Quality (RSRQ), a signal to interference-plus-noise ratio (SINR) and a priority.

The handover device may determine a handover target according to the handover priority list, and instruct the UE to execute a handover procedure (S305).

When the handover procedure ends, the handover device may obtain a handover result, obtain handover parameters according to the handover result, and input the handover parameters into a handover model (S306), wherein the handover parameters at least comprise handover attempts, handover success, handover cancellations, and network reasons.

When the handover parameters have been input into the handover model, the handover model may update the handover priority list according to the signal references in the measurement report, the neighborhood information and the handover parameters.

Specifically, before the handover model has not output the handover priority list 200, the handover device first generates the handover priority list according to the signal references obtained in step S302 and the neighborhood information obtained in step S303. After the handover model has output the handover priority list, the handover device may repeatedly execute steps S302-S306. In other words, except for the first time that the handover model generates the handover priority list based on the signal references and the neighborhood information, the handover model may subsequently update the handover priority list according to the signal references, the neighborhood information and the handover parameters. In the second embodiment, although the handover model may not be corrected immediately, the purpose of updating the handover priority list in real time may still be achieved.

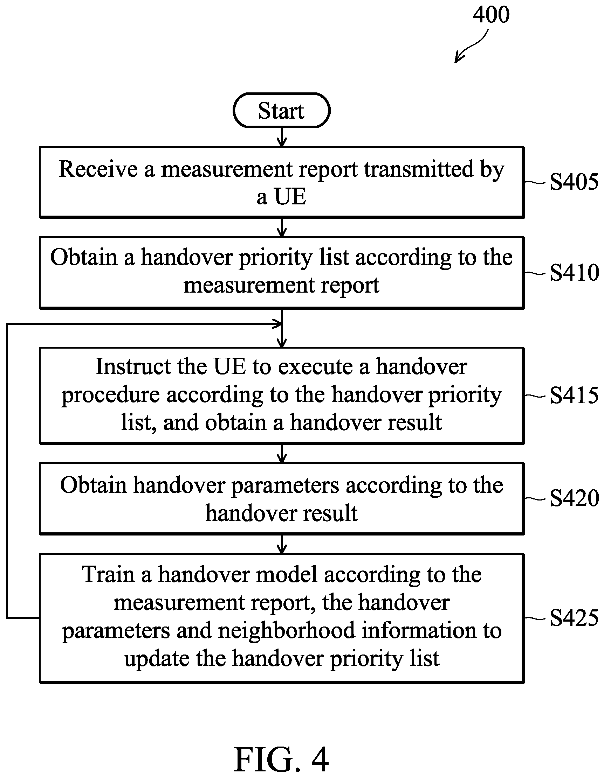

FIG. 4 is a flowchart 400 illustrating the method for determining a handover target according to an embodiment of the present disclosure. The flowchart 400 corresponds to the first embodiment in FIG. 2 and may be executed by the handover device 150 in FIG. 1.

In step S405, the handover device receives a measurement report transmitted by a user equipment (UE), wherein the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In step S410, the handover device obtains a handover priority list according to the measurement report, wherein the handover priority list at least comprises a cell identifier (ID) and a cell type, a reference signal receiving power (RSRP), a reference signal receiving quality (RSRQ), a signal to interference-plus-noise ratio (SINR) and a priority.

In step S415, the handover device instructs the UE to execute a handover procedure according to the handover priority list, and obtains a handover result.

In step S420, the handover device obtains handover parameters according to the handover result, wherein the handover parameters at least comprise handover attempts, handover success, handover cancellations, and network reasons.

In step S425, the handover device trains a handover model according to the measurement report, the handover parameters and neighborhood information to update the handover priority list, wherein the neighborhood information is transmitted by a base station or a core network, and at least comprises: General Packet Radio Service (GPRS), a cell type, time and a cell capacity.

Next, the handover device may repeatedly execute steps S415, S420, and S425 to continuously train the handover model and update the handover priority list.

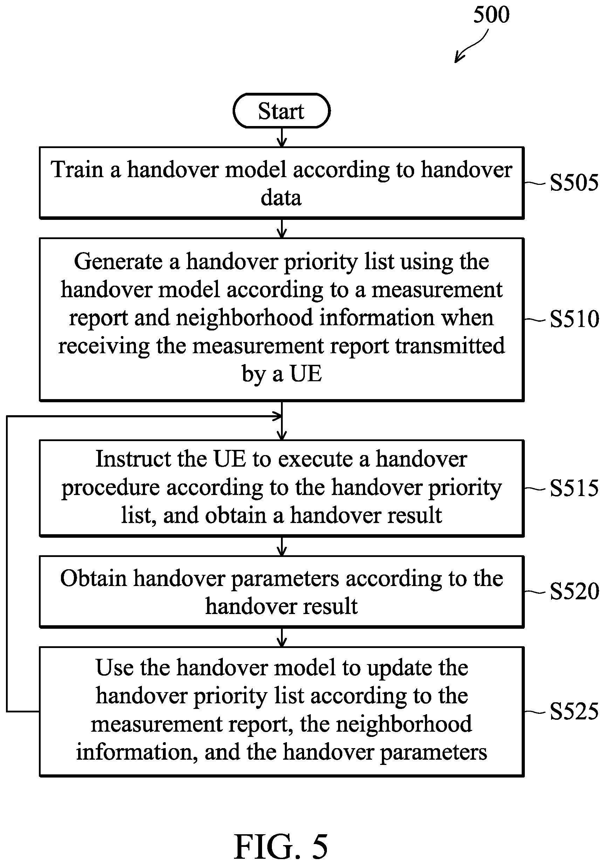

FIG. 5 is a flowchart 500 illustrating the method for determining a handover target according to an embodiment of the present disclosure. The flowchart 500 corresponds to the second embodiment in FIGS. 3A~3B and may be executed by the handover device 150 in FIG. 1.

In step S505, the handover device trains a handover model according to handover data, wherein the handover data is relevant historical data after the UE executes the handover procedure.

In step S510, the handover device generates a handover priority list using the handover model according to a measurement report and neighborhood information when receiving the measurement report transmitted by a user equipment (UE), wherein the handover priority list at least comprises a cell identifier (ID) and a cell type, a reference signal receiving power (RSRP), a reference signal receiving quality (RSRQ), a signal to interference-plus-noise ratio (SINR) and a priority, and the neighborhood information is transmitted by a base station or a core network, and at least comprises: General Packet Radio Service (GPRS), a cell type, time and a cell capacity.

In one embodiment, the handover device uses the handover model to output a handover priority list according to the signal references included in the measurement report and the neighborhood information, wherein the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

In step S515, the handover device instructs the UE to execute a handover procedure according to the handover priority list, and obtains a handover result.

In step S520, the handover device obtains handover parameters according to the handover result, wherein the handover parameters at least comprise handover attempts, handover success, handover cancellations, and network reasons.

In step S525, the handover device uses the handover model to update the handover priority list according to the measurement report, the neighborhood information, and the handover parameters.

Next, the handover device may repeatedly execute steps S515, S520, and S525 to continuously update the handover priority list.

As mentioned above, the method and device for determining a handover target in the disclosure train a handover model, generate a handover priority list, and determine a handover target according to the handover priority list. The handover model may be used to handle a large amount of calculations, and achieve the purpose of quickly determining the handover target.

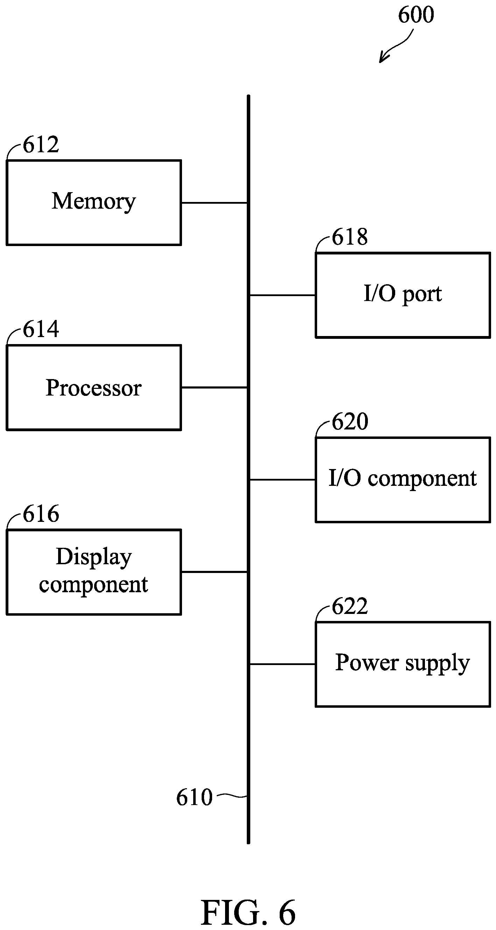

Having described embodiments of the present disclosure, an exemplary operating environment in which embodiments of the present disclosure may be implemented is described below. Referring to FIG. 6, an exemplary operating environment for implementing embodiments of the present disclosure is shown and generally known as an electronic device 600. The electronic device 600 is merely an example of a suitable computing environment and is not intended to limit the scope of use or functionality of the disclosure. Neither should the electronic device 600 be interpreted as having any dependency or requirement relating to any one or combination of components illustrated.

The disclosure may be realized by means of the computer code or machine-useable instructions, including computer-executable instructions such as program modules, being executed by a computer or other machine, such as a personal data assistant (PDA) or other handheld device. Generally, program modules may include routines, programs, objects, components, data structures, etc., and refer to code that performs particular tasks or implements particular abstract data types. The disclosure may be implemented in a variety of system configurations, including hand-held devices, consumer electronics, general-purpose computers, more specialty computing devices, etc. The disclosure may also be implemented in distributed computing environments where tasks are performed by remote-processing devices that are linked by a communication network.

With reference to FIG. 6, the electronic device 600 may include a bus 610 that is directly or indirectly coupled to the following devices: one or more memories 612, one or more processors 614, one or more display components 616, one or more input/output (I/O) ports 618, one or more input/output components 620, and an illustrative power supply 622. The bus 610 may represent one or more kinds of busses (such as an address bus, data bus, or any combination thereof). Although the various blocks of FIG. 6 are shown with lines for the sake of clarity, and in reality, the boundaries of the various components are not specific. For example, the display component such as a display device may be considered an I/O component and the processor may include a memory.

The electronic device 600 typically includes a variety of computer-readable media. The computer-readable media can be any available media that can be accessed by electronic device 600 and includes both volatile and nonvolatile media, removable and non-removable media. By way of example, not limitation, computer-readable media may comprise computer storage media and communication media. The computer storage media may include volatile and nonvolatile, removable and non-removable media implemented in any method or technology for storage of information such as computer-readable instructions, data structures, program modules or other data. The computer storage media may include, but not limit to, random access memory (RAM), read-only memory (ROM), electrically-erasable programmable read-only memory (EEPROM), flash memory or other memory technology, compact disc read-only memory (CD-ROM), digital versatile disks (DVD) or other optical disk storage, magnetic cassettes, magnetic tape, magnetic disk storage or other magnetic storage devices, or any other medium which can be used to store the desired information and which can be accessed by the electronic device 600. The computer storage media may not comprise signals per se.

The communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, but not limitation, communication media includes wired media such as a wired network or direct-wired connection, and wireless media such as acoustic, RF, infrared and other wireless media or any combination thereof.

The memory 612 may include computer-storage media in the form of volatile and/or nonvolatile memory. The memory may be removable, non-removable, or a combination thereof. Exemplary hardware devices include solid-state memory, hard drives, optical-disc drives, etc. The electronic device 600 includes one or more processors that read data from various entities such as the memory 612 or the I/O components 620. The display component(s) 616 present data indications to a user or to another device. Exemplary presentation components include a display device, speaker, printing component, vibrating component, etc.

The I/O ports 618 allow the electronic device 600 to be logically coupled to other devices including the I/O components 620, some of which may be embedded. Illustrative components include a microphone, joystick, game pad, satellite dish, scanner, printer, wireless device, etc. The I/O components 620 may provide a natural user interface (NUI) that processes gestures, voice, or other physiological inputs generated by a user. For example, inputs may be transmitted to an appropriate network element for further processing. A NUI may be implemented to realize speech recognition, touch and stylus recognition, facial recognition, biometric recognition, gesture recognition both on screen and adjacent to the screen, air gestures, head and eye tracking, touch recognition associated with displays on the electronic device 600, or any combination thereof. The electronic device 600 may be equipped with depth cameras, such as stereoscopic camera systems, infrared camera systems, RGB camera systems, or any combination thereof, to realize gesture detection and recognition. Furthermore, the electronic device 600 may be equipped with accelerometers or gyroscopes that enable detection of motion. The output of the accelerometers or gyroscopes may be provided to the display of the electronic device 1100 to carry out immersive augmented reality or virtual reality.

Furthermore, the processor 614 in the electronic device 600 can execute the program code in the memory 612 to perform the above-described actions and steps or other descriptions herein.

## Claims

1. A method (400) for determining a handover target, comprising:
receiving (S405) a measurement report transmitted by a user equipment (UE);
obtaining (S410) a handover priority list according to the measurement report;
instructing (S415) the UE to execute a handover procedure according to the handover priority list and obtaining a handover result;
obtaining (S420) handover parameters according to the handover result; and
training (S425) a handover model according to the measurement report, the handover parameters and neighborhood information to update the handover priority list.

2. The method (400) as claimed in claim 1, wherein the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio; or wherein the handover parameters at least comprise handover attempts, handover success, handover cancellations, and network reasons.

3. The method (400) as claimed in claim 1, wherein the neighborhood information is transmitted by a base station or a core network, and at least comprises: General Packet Radio Service (GPRS), a cell type, time and a cell capacity; or wherein the handover model is based on a Recursive Neural Network (RNN) model or a Deep Recursive Neural Network (DRNN) model.

4. A method (500) for determining a handover target, comprising:
training (S505) a handover model according to handover data;
generating (S510) a handover priority list using the handover model according to a measurement report and neighborhood information when receiving the measurement report transmitted by a user equipment (UE);
instructing (S515) the UE to execute a handover procedure according to the handover priority list and obtaining a handover result;
obtaining (S520) handover parameters according to the handover result; and
updating (S525) the handover priority list using the handover model according to the measurement report, the neighborhood information and the handover parameters.

5. The method (500) as claimed in claim 4, wherein the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio; or wherein the handover parameters at least comprise handover attempts, handover success, handover cancellations, and network reasons.

6. The method (500) as claimed in claim 4, wherein the neighborhood information is transmitted by a base station or a core network, and at least comprises: General Packet Radio Service (GPRS), a cell type, time and a cell capacity; or wherein the handover model is based on a Recursive Neural Network (RNN) model or a Deep Recursive Neural Network (DRNN) model.

7. A device (150, 600) for determining a handover target, comprising:
one or more processors; and
one or more computer storage media for storing one or more computer-readable instructions, wherein the processor is configured to drive the computer storage media to execute the following tasks:
receiving a measurement report transmitted by a user equipment (UE);
obtaining a handover priority list according to the measurement report;
instructing the UE to execute a handover procedure according to the handover priority list and obtaining a handover result;
obtaining handover parameters according to the handover result; and
training a handover model according to the measurement report, the handover parameters and neighborhood information to update the handover priority list.

8. The device (150, 600) as claimed in claim 7, wherein the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

9. The device (150, 600) as claimed in claim 7, wherein the handover parameters at least comprise handover attempts, handover success, handover cancellations, and network reasons.

10. The device (150, 600) as claimed in claim 7, wherein the neighborhood information is transmitted by a base station or a core network, and at least comprises: General Packet Radio Service (GPRS), a cell type, time and a cell capacity.

11. The device (150, 600) as claimed in claim 7, wherein the handover model is based on a Recursive Neural Network (RNN) model or a Deep Recursive Neural Network (DRNN) model.

12. A device (150, 600) for determining a handover target, comprising:
one or more processors; and
one or more computer storage media for storing one or more computer-readable instructions, wherein the processor is configured to drive the computer storage media to execute the following tasks:
training a handover model according to handover data;
generating a handover priority list using the handover model according to a measurement report and neighborhood information when receiving the measurement report transmitted by a user equipment (UE);
instructing the UE to execute a handover procedure according to the handover priority list and obtaining a handover result;
obtaining handover parameters according to the handover result; and
updating the handover priority list using the handover model according to the measurement report, the neighborhood information and the handover parameters.

13. The device (150, 600) as claimed in claim 12, wherein the measurement report comprises signal references, and the signal references at least comprise: a user equipment address, a Signal to Interference-plus-noise Ratio (SINR), a Received Signal Strength Indication (RSSI), a Reference Signal Receiving Power (RSRP), a Side-link Channel Occupancy Ratio and a Side-link Channel Busy Ratio.

14. The device (150, 600) as claimed in claim 12, wherein the handover parameters at least comprise handover attempts, handover success, handover cancellations, and network reasons.

15. The device (150, 600) as claimed in claim 12, wherein the neighborhood information is transmitted by a base station or a core network, and at least comprises: General Packet Radio Service (GPRS), a cell type, time and a cell capacity; or wherein the handover model is based on a Recursive Neural Network (RNN) model or a Deep Recursive Neural Network (DRNN) model.
